# DEMANDE DE BREVET EUROPEEN

(11) **EP 3 764 496 A1**
(43) Date de publication de la demande: **13.01.2021**
(21) Numéro de dépôt: 19315066.1
(22) Date de dépôt: 10.07.2019
(51) Int. Cl.: H02H 3/04

(54) **PROCÉDÉ PERMETTANT, À PARTIR D'UN APPAREIL DE PROTECTION, D'INDIQUER AU MOINS UNE INFORMATION DE DÉFAUT RELATIVE À AU MOINS UN DÉFAUT DÉTECTÉ DANS UNE LIGNE ÉLECTRIQUE, UN TEL APPAREIL DE PROTECTION ET INSTALLATION ÉLECTRIQUE COMPRENANT AU MOINS UN TEL APPAREIL DE PROTECTION**

(71) Demandeur: HAGER-ELECTRO SAS, 67210 Obernai (FR)
(72) Inventeur: Britsch, Nicolas, 68125 Houssen (FR); Kennel, Vincent, 67880 Krautergersheim (FR); Lea, David, 68150 Ribeauville (FR); Schall, Stéphane, 67310 Dangolsheim (FR); Siegrist, Anthony, 67460 Souffelweyersheim (FR)
(74) Mandataire: Cabinet Nuss

(57) **Abrégé**

La présente invention a pour objet un procédé permettant, à partir d'un appareil de protection, d'indiquer au moins une information de défaut relative à au moins un défaut détecté dans une ligne électrique (L).

Il consiste, suite à la détection d'au moins un défaut par l'appareil de protection, à traiter le ou les défaut(s) détecté(s) par l'appareil de protection pour déterminer au moins une information de défaut(s), mémoriser la ou les information(s) de défaut et, à l'état déclenché, à indiquer la ou au moins l'une desdites informations à l'utilisateur en commandant manuellement ou automatiquement l'activation d'un indicateur lumineux et/ou sonore parcouru par un courant électrique provenant de la source de courant (S) ou de tension alimentant ladite ligne ou d'une source d'énergie autonome. Elle a également pour objet un tel appareil de protection et une installation électrique comprenant au moins un tel appareil.

## Description

|La présente invention concerne le domaine des appareils de protection, tels que les détecteurs d'arc électrique, les disjoncteurs ou les interrupteurs différentiels, pour la protection des lignes électriques, notamment des lignes électriques domestiques ou d'habitations alimentées par une source de courant ou de tension, généralement une source de courant alternatif. Elle a pour objet un procédé permettant, à partir d'un appareil de protection, d'indiquer au moins une information de défaut relative à au moins un défaut détecté dans une ligne électrique. Elle a également pour objet un tel appareil de protection convenant à la mise oeuvre dudit procédé et une installation électrique comprenant une ligne électrique et au moins un tel appareil de protection.

Les appareils de protection sont configurés pour détecter des défauts susceptibles de survenir dans une ligne électrique à protéger alimentée par une source de courant, généralement une source de courant alternatif, et, suite à la détection d'un défaut, pour déclencher, ce qui a pour effet d'interrompre dans ladite ligne le passage du courant provenant de ladite source de courant. Suite à ce déclenchement, le passage du courant dans la ligne électrique est à nouveau rendu possible par un réarmement manuel de l'appareil de protection. Une ligne électrique est généralement protégée par une pluralité d'appareils de protection reliés fonctionnellement à cette dernière dans un tableau électrique.

On sait qu'un appareil de protection comprend un mécanisme de contacts, également connu sous le nom de mécanisme de serrure, apte à être déclenché dans un état de déclenchement permettant d'interrompre le passage du courant dans la ligne électrique et à être enclenché dans un état de réarmement permettant le passage du courant dans cette dernière, un mécanisme de détection de défaut et de déclenchement électromécanique et/ou électronique capable de détecter au moins un défaut dans ladite ligne électrique et, suite à ladite détection, de déclencher ledit mécanisme de contacts. Il comprend en outre un organe de manoeuvre permettant de commander manuellement le mécanisme de contacts pour le mettre à l'état de réarmement. Ainsi, lorsque l'appareil de protection est relié fonctionnellement à la ligne électrique à protéger, le mécanisme de contacts est relié à ladite ligne électrique en un point de connexion de sorte à interrompre le passage du courant, à l'état de déclenchement, en aval dudit point de connexion.

Le mécanisme de contacts comprend des contacts, dont certains sont mobiles par rapports à d'autres contacts fixes, entre deux positions stables à savoir, à l'état de déclenchement du mécanisme de contacts, une position d'ouverture (ou de coupure) interrompant le passage du courant dans la ligne électrique et, à l'état de réarmement, dans une position de fermeture permettant le passage du courant dans la ligne électrique à protéger.

Les défauts détectés par ces appareils de protection sont de différents types, le plus souvent des surcharges, des courts-circuits, des courants de fuite ou des arcs électriques qui peuvent avoir des conséquences plus ou moins importantes. Plus particulièrement, les surcharges et les courts-circuits peuvent entraîner des dégâts ou des destructions localisés dans les matériels, les appareils, les conducteurs et/ou les connexions de la ligne électrique, tandis que les arcs électriques peuvent causer des incendies et les courants de fuite des blessures plus ou moins graves pour les personnes en contact avec lesdits matériels ou appareils de la ligne électrique à protéger.

Pour ce qui concerne plus particulièrement les défauts d'arcs électriques, on connait deux types de défaut d'arcs électriques, l'un relatif aux arcs électriques en série dont le courant est limité par la charge et l'autre relatif aux arcs électriques, dits parallèles, produits entre deux conducteurs de potentiels différents (phase à neutre par exemple).

Un problème important est de permettre à l'utilisateur, suite au déclenchement de l'appareil de protection, d'obtenir des informations lui permettant de savoir quel(s) défauts a/ont été détecté(s) par ledit appareil de protection. L'obtention de ces informations présente un intérêt particulier lorsque le défaut, tel que le défaut d'arcs électriques, comporte plusieurs types de défaut.

Pour obtenir cette information, il a été mis au point des appareils de protection qui sont équipés d'un afficheur de défaut permettant à l'utilisateur de visualiser, généralement au moyen d'un afficheur mécanique comprenant une pièce mécanique de couleur mobile et/ou d'un afficheur lumineux comprenant des LEDs, le type de défaut détecté, par exemple l'un des défauts précités. Le document EP3048630 a pour objet un appareil de protection offrant à la fois une visualisation du défaut au moyens d'afficheurs lumineux tels que des LEDs et une visualisation mécanique au moyen d'un bouton test mobile qui ressort de quelques millimètres de l'une des faces du boîtier de l'appareil lorsque celui-ci déclenche et qui permet à l'utilisateur, en appuyant sur le bouton de test, de réarmer l'appareil afin d'alimenter les LEDs en courant pour la visualisation du défaut.

Toutefois, si ces afficheurs/indicateurs de défaut permettent d'indiquer à l'utilisateur des informations de défaut relatives à des défauts détectés ayant entraîné le déclenchement de l'appareil de protection concerné, ils présentent néanmoins les inconvénients suivants :
- les afficheurs mécaniques, qui permettent une visualisation du défaut à l'état déclenché/désarmé de l'appareil de protection, ne permettent pas d'afficher ou d'indiquer plusieurs défauts, ni d'obtenir un type précis de défaut tel que par exemple, pour un appareil de protection comprenant une fonction de protection contre les défauts d'arcs électriques, un défaut d'arc série ou d'arc parallèle,
- les afficheurs lumineux ne permettent la visualisation du défaut qu'après avoir réarmé l'appareil de protection pour pouvoir alimenter en courant l'afficheur lumineux.

La présente invention a pour but de pallier ces inconvénients en proposant un procédé permettant, à partir d'un appareil de protection d'une ligne électrique, d'indiquer de manière lumineuse et/ou sonore au moins une information de défaut relative à au moins un défaut détecté dans une ligne électrique, ce sans nécessiter le réarmement de l'appareil de protection. Elle a également pour objet un appareil de protection convenant à la mise oeuvre dudit procédé et permettant d'obtenir les avantages précités.

A cet effet, le procédé, qui permet, à partir d'un appareil de protection, d'indiquer au moins une information de défaut relative à au moins un défaut détecté dans une ligne électrique, ladite ligne électrique étant alimentée par une source de courant ou de tension, ledit appareil de protection étant apte à détecter le ou lesdits défaut(s) détecté(s) dans ladite ligne électrique et, suite à ladite détection, à être mis dans un état de déclenchement interrompant le passage du courant dans la ligne électrique et dans un état de réarmement permettant le passage du courant dans cette dernière, se caractérise en ce qu'il consiste, suite à la détection du ou d'au moins un défaut par l'appareil de protection, à réaliser les étapes suivantes :
- traiter le ou les défaut(s) détecté(s) par l'appareil de protection pour déterminer une ou des information(s) de défaut,
- mémoriser la ou les information(s) de défaut,
- à l'état déclenché de l'appareil de protection, indiquer ladite ou au moins l'une desdites information(s) de défaut à l'utilisateur en commandant manuellement ou automatiquement l'activation d'un indicateur lumineux et/ou sonore parcouru par un courant électrique provenant de la source de courant alimentant la ligne électrique ou d'une source d'énergie, telle qu'une source de de courant ou de tension, autonome.

L'appareil de protection, selon la présente invention, convenant à la mise oeuvre dudit procédé, ledit appareil de protection comprenant un mécanisme de contacts apte à être déclenché dans un état de déclenchement permettant d'interrompre le passage du courant dans une ligne électrique alimentée par une source de courant ou de tension et à être enclenché dans un état de réarmement permettant le passage du courant dans ladite ligne électrique, un mécanisme de détection de défaut et de déclenchement capable de détecter au moins un défaut dans ladite ligne électrique et, suite à ladite détection, de déclencher automatiquement le mécanisme de contacts et un organe de manoeuvre permettant de commander ce dernier pour le mettre à l'état de réarmement, se caractérise en ce qu'il comprend en outre un dispositif indicateur de défaut(s) lumineux et/ou sonore comprenant un circuit électronique apte à traiter le ou les défaut(s) détecté(s) pour déterminer une ou des information(s) de défaut et à mémoriser cette/ces dernière(s), un indicateur lumineux et/ou sonore apte à être activé dans un état parcouru par un courant électrique permettant d'indiquer de manière lumineuse et/ou sonore la ou au moins l'une des information(s) de défaut et un moyen de commande manuel ou automatique permettant, c'est-à-dire lors de sa sollicitation, de commander manuellement, via le circuit électronique ou automatiquement, depuis ledit circuit électronique, l'activation dudit indicateur lumineux et/ou sonore, ledit dispositif indicateur de défaut(s) étant apte à être alimenté en courant par la source de courant alimentant la ligne électrique et/ou par une source de courant autonome que peut comprendre en outre l'appareil de protection ou qui peut être reliée à ce dernier.

La présente invention a encore pour objet une installation électrique comprenant une ligne électrique et au moins un appareil de protection, ladite installation comprenant en outre une source de courant alimentant ladite ligne électrique à laquelle est reliée fonctionnellement le ou chaque appareil de protection, se caractérisant en ce que le ou au moins l'un des appareil(s) de protection consiste en un appareil de protection selon la présente invention et en ce que le mécanisme de contacts dudit appareil de protection est relié fonctionnellement à la ligne électrique en un point de connexion de sorte à pouvoir interrompre, à l'état déclenché, le passage du courant dans ladite ligne électrique en aval dudit point de connexion.

La présente invention permet ainsi, à l'état de déclenchement d'un appareil de protection ayant détecté un ou plusieurs défaut(s), d'indiquer à un utilisateur, de manière lumineuse et/ou sonore, une ou plusieurs information(s) de défaut relative(s) au(x)dit défaut(s) détecté(s), ce sans nécessiter de réarmer ledit appareil de protection. Elle peut permettre également de transmettre à l'utilisateur un nombre d'informations de défaut plus important qu'avec les afficheurs mécaniques actuels.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 est une vue en perspective d'un appareil de protection selon la présente invention, dans un mode de réalisation comprenant un moyen de commande manuel de l'activation de l'indicateur lumineux, ledit moyen de commande étant monté, avec l'organe de commande du réarmement, sur la face frontale du boîtier de l'appareil de protection,
- la figure 2 est une représentation du schéma électrique, plus particulièrement du circuit électronique, de l'appareil protection représenté sur la figure 1 et de sa connexion à une ligne électrique, plus particulièrement une ligne électrique monophasée comprenant un conducteur de phase et un conducteur de neutre, et à une source de courant alternatif alimentant ladite ligne, dans une configuration à l'état déclenché dudit appareil de protection et à l'état de non sollicitation du moyen de commande manuel,
- la figure 3 correspond à la figure 2, mais à l'état de sollicitation du moyen de commande manuel,
- la figure 4 correspond au schéma électrique de la figure 2, sans l'interrupteur de test, et avec une connexion de la troisième entrée d'alimentation du circuit électronique en aval du point de connexion.

Les figures montrent un appareil de protection 1, selon la présente invention, permettant d'indiquer de manière lumineuse et/ou sonore au moins une information de défaut relative à au moins un défaut détecté dans une ligne électrique L. Un tel appareil de protection convient à la mise en oeuvre du procédé selon la présente invention et sera décrit plus en détail par la suite.

La ligne électrique L peut être une ligne électrique monophasée ou polyphasée, c'est-à-dire une ligne électrique comprenant un conducteur de référence de potentiel électrique tel qu'un conducteur de neutre N et un ou plusieurs conducteur(s) de potentiel électrique tel(s) qu'un ou plusieurs conducteur(s) de phase P.

Un tel procédé, selon la présente invention, permet, à partir d'un tel appareil de protection 1, d'indiquer à l'utilisateur au moins une information de défaut relative à au moins un défaut détecté dans une ligne électrique L, ladite ligne électrique étant alimentée par une source de courant S, qui peut être une source de courant alternatif ou continu, ledit appareil de protection 1 étant apte à détecter le ou lesdits défauts détecté(s) dans ladite ligne électrique L et, suite à ladite détection, à être mis dans un état de déclenchement interrompant le passage du courant dans la ligne électrique L et dans un état de réarmement permettant le passage du courant dans cette dernière.

Conformément à la présente invention, un tel procédé consiste, suite à la détection du ou d'au moins un défaut par l'appareil de protection 1, à réaliser les étapes suivantes :
- traiter le ou les défaut(s) détecté(s) par l'appareil de protection 1 pour déterminer une ou des information(s) de défaut,
- mémoriser la ou les information(s) de défaut,
- à l'état déclenché de l'appareil de protection, indiquer ladite ou au moins l'une desdites information(s) de défaut à l'utilisateur en commandant manuellement ou automatiquement l'activation d'un indicateur 5b lumineux et/ou sonore parcouru par un courant électrique provenant de la source de courant S alimentant la ligne électrique ou d'une source d'énergie, telle qu'une source de courant ou de tension, autonome.

En outre, le procédé peut consister à indiquer la ou les information(s) de défaut selon un ordre d'indication prédéterminé et/ou selon une durée prédéterminée pour la ou chaque information de défaut. Par exemple, dans le cas d'un appareil de protection selon la présente invention adapté pour détecter des défauts d'arc électrique et un défaut de court-circuit, le procédé peut consister, suite à la détection d'un défaut d'arc électrique série, d'un défaut d'arc électrique parallèle et d'un défaut de court-circuit, à indiquer successivement et selon une durée prédéterminée par type de défaut, l'information de défaut d'arc électrique parallèle, puis l'information de défaut d'arc électrique série puis l'information de défaut de court-circuit.

D'autre part, le procédé peut consister à indiquer, de manière lumineuse et/ou sonore, à l'utilisateur la ou au moins l'une desdites informations de défaut :
- directement sur l'appareil de protection 1, et/ou
- à distance dudit appareil de protection 1, sur un support intelligent ou multifonctions, fixe ou mobile, tel qu'un téléphone portable, un smartphone ou un ordinateur fixe ou portable, une tablette électronique ou un appareil de test, ledit support comprenant un écran et un haut-parleur formant l'indicateur 5b lumineux et/ou sonore, et ceci par l'intermédiaire d'un dispositif de communication à distance, filaire ou sans fil, non représenté sur les figures annexés, que peut comprendre en outre l'appareil de protection 1 et qui peut être activé lors de la commande manuelle ou automatique de l'activation de l'indicateur 5b lumineux et/ou sonore. La communication sans fil peut être, par exemple, une communication par radiofréquence.

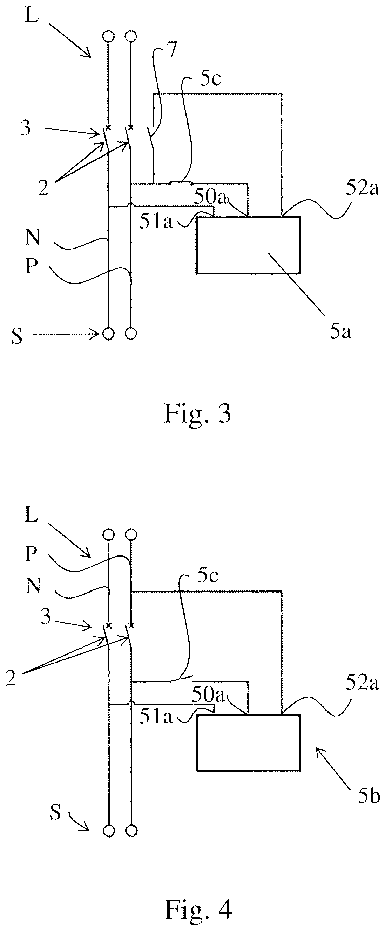

Le procédé peut consister à indiquer la ou au moins l'une des information(s) de défaut(s) tant que la commande de l'activation de l'indicateur 5b lumineux et/ou sonore est effectuée ou selon une durée prédéterminée déclenchée lors de la commande, par exemple grâce à une temporisation, déclenchée lors de la sollicitation de ladite commande. Par exemple, à partir d'un moyen de commande 5c manuel, tel qu'un bouton poussoir, configuré pour pouvoir être sollicité en déplacement entre une première position de commande et une deuxième position d'arrêt de la commande de l'affichage, le procédé peut consister à indiquer de manière lumineuse et/ou sonore la ou les information(s) de défaut tant que ledit moyen de commande 5c manuel est maintenu dans ladite première position (figure 3) ou, dans le cas où le circuit électronique 5a comprend une temporisation, selon une durée prédéterminée déclenchée lors de la sollicitation du moyen de commande 5c manuel pour le déplacer dans la première position.

Les figures annexées montrent un appareil de protection 1, selon la présente invention, convenant à la mise oeuvre du procédé selon la présente invention, ledit appareil de protection 1 comprenant :
- un mécanisme de contacts 2 apte à être déclenché (ou mis) dans un état de déclenchement permettant d'interrompre le passage du courant dans une ligne électrique L alimentée par une source de courant S ou de tension, qui peut être respectivement une source de courant alternatif ou continu ou une source de tension continue ou alternative, et à être enclenché (ou mis) dans un état de réarmement permettant le passage du courant dans ladite ligne électrique L,
- un mécanisme de détection de défaut et de déclenchement, non représenté ou non visible sur les figures annexés concernées, capable de détecter au moins un défaut dans ladite ligne électrique L et, suite à ladite détection, de déclencher automatiquement le mécanisme de contacts 2 et
- un organe de manoeuvre 4 permettant de commander ce dernier pour le mettre (ou l'enclencher) à l'état de réarmement.

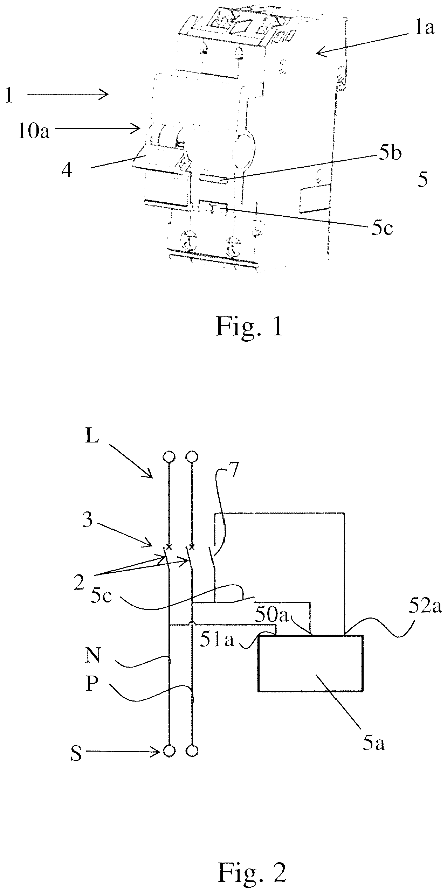

Conformément à la présente invention, un tel appareil de protection 1 comprend en outre un dispositif indicateur de défaut(s) lumineux et/ou sonore. Ce dernier comprend un circuit électronique 5a apte à traiter le ou les défaut(s) détecté(s) pour déterminer une ou des information(s) de défaut et à mémoriser cette/ces dernière(s), un indicateur 5b lumineux et/ou sonore apte à être activé dans un état parcouru par un courant électrique permettant d'indiquer de manière lumineuse et/ou sonore la ou au moins l'une des information(s) de défaut et un moyen de commande 5c manuel ou automatique permettant de commander manuellement, via le circuit électronique 5a ou automatiquement, depuis ledit circuit électronique 5a, l'activation dudit indicateur 5b lumineux et/ou sonore. Le dispositif indicateur de défaut(s) est apte à être alimenté en courant par la source de courant S alimentant la ligne électrique L (figures 2, 3, 4), et/ou par une source de courant autonome que peut comprendre en outre l'appareil de protection 1 ou qui peut être reliée à ce dernier.

Un tel appareil de protection 1, selon la présente invention, peut être capable d'interrompre le passage du courant en cas de défaut(s) de surcharge, de court-circuit, de fuite de courant et/ou d'arc électrique susceptibles de survenir dans la ligne électrique à protéger L à laquelle il est apte et destiné à être relié fonctionnellement. Il peut fonctionner à partir d'une technologie connue électromécanique et/ou électronique pour la partie de base de détection du ou des défaut(s) et de déclenchement, non décrite en détail dans la présente demande.

Dans le cas d'une commande manuelle de l'activation de l'indicateur 5b lumineux et/ou sonore, le moyen de commande 5c manuel peut consister par exemple en un bouton poussoir et, dans le cas d'une commande automatique de l'activation de l'indicateur 5b lumineux et/ou sonore, le moyen de commande automatique peut être intégré dans le circuit électronique 5a qui est alors apte à commander automatiquement, suite à une détection de l'état déclenché et à un moment prédéterminé, l'activation dudit indicateur 5b lumineux et/ou sonore.

Ainsi, l'utilisateur peut être informé de manière lumineuse (figures annexées), c'est-à-dire visuellement, ou de manière sonore, c'est-à-dire par un message sonore, du ou d'au moins l'un des défaut(s) détectés, à l'état déclenché de l'appareil de protection 1, c'est-à-dire sans avoir à réarmer, au moyen de l'organe de manoeuvre 4, l'appareil de protection 1. Un tel réarmement est nécessaire dans les systèmes actuels comprenant des afficheurs lumineux, pour alimenter électriquement ce dernier.

En outre, le traitement, par le circuit électronique 5a, des signaux électriques représentatifs du ou desdits défaut(s) détecté(s) et de la commande par ce dernier, sous l'effet de la sollicitation du moyen de commande 5c manuel ou automatique, de l'indicateur 5b lumineux et/ou sonore, peut permettre de transmettre à l'utilisateur un nombre d'informations plus important qu'avec les système actuels et notamment les afficheurs mécaniques actuels, tout en ne nécessitant pas un réarmement de l'appareil de protection 1.

Le circuit électronique 5a, qui peut être une carte électronique, peut comprendre un microprocesseur, ou un microcontrôleur, et des mémoires. Le microprocesseur ou le microcontrôleur peut être prévu pour intégrer ou former le moyen de commande automatique de l'indicateur 5b lumineux e/ou sonore.

L'indicateur 5b lumineux peut consister en une ou plusieurs sources lumineuses telles que des LEDs (figure 1), ou un écran d'affichage lumineux tactile ou non, qui peuvent être pilotés par le circuit électronique 5a, notamment par le microprocesseur ou le microcontrôleur. L'indicateur 5b sonore peut consister en au moins un haut-parleur. L'indicateur 5b lumineux et/ou sonore peut combiner les deux fonctions lumineuse et sonore, c'est-à-dire qu'il peut comprendre au moins une source lumineuse 5b, telle qu'une LED et au moins un haut-parleur.

L'appareil de protection 1, comme on peut le voir sur la figure 1, peut comprendre un boîtier 1a pour contenir l'ensemble des composants et des mécanismes de fonctionnement de base dudit appareil de protection 1 tels que le mécanisme de contacts 2 et le mécanisme de détection de défaut et de déclenchement. En outre, le boîtier 1a peut être adapté pour contenir en outre le dispositif indicateur de défaut(s) et peut présenter au moins une face externe/visible, de préférence une face frontale 10a, comportant les organes de commande tels que l'organe de manoeuvre 4 et le moyen de commande 5c de l'indicateur 5b lumineux et/ou sonore. Le cas échéant, la ou l'une des face(s) externe(s)/visible(s), de préférence la face frontale 10a, du boîtier peut comporter un interrupteur de test 7 tel que décrit plus loin.

Si on se réfère à nouveau à la figure 1, on peut voir que dans une première forme de réalisation de l'indicateur 5b lumineux et/ou sonore, ce dernier peut être monté dans le boîtier 1a de l'appareil de protection 1, plus particulièrement sur l'une des faces externes/visibles, de préférence sur la face frontale 10a, comportant les organes de commande tels que l'organe de manoeuvre 4 et le moyen de commande 5c dudit indicateur 5b lumineux et/ou sonore. L'indicateur 5b lumineux et/ou sonore peut être, par exemple, situé à proximité immédiate du moyen de commande 5c.

D'autre part, la présente invention peut prévoir que l'interrupteur de test 7 et le moyen de commande 5c soient actionnés, soit par un bouton de commande commun qui peut être monté sur la ou l'une des faces externes/visibles, de préférence sur la face frontale 10a, du boîtier 10, soit par deux boutons de commande dédiés chacun ou formant chacun respectivement l'interrupteur de test 7 et le moyen de commande 5c.

Dans une deuxième forme de réalisation de l'indicateur 5b lumineux et/ou sonore, non représentée sur les figures annexées et pouvant être combinée avec la première forme de réalisation, ce dernier peut être monté sur un support intelligent ou multifonctions, fixe ou mobile, tel qu'un téléphone portable, un smartphone ou un ordinateur fixe ou portable, distinct de l'appareil de protection 1 et comprenant, d'une part, un écran et un haut-parleur pouvant avantageusement former ledit indicateur 5b lumineux et/ou sonore et, d'autre part, des moyens communication permettant la communication de données entre l'appareil de protection 1 et le support intelligent ou multifonctions de sorte à permettre la transmission de la ou d'au moins l'une desdites informations de défaut depuis l'appareil de protection 1 vers ledit support intelligent ou multifonctions en vue de leur indication de manière lumineuse et/ou sonore.

On comprendra que dans le cas où cette deuxième forme de réalisation est combinée avec la première, l'indicateur 5b lumineux et/ou sonore peut comporter une partie située dans l'appareil de protection 1 pour permettre l'indication de la ou d'au moins l'une des information(s) de défaut directement sur ledit appareil de protection 1 et une partie située sur le support intelligent ou multifonctions associé pour permettre également l'indication de la ou d'au moins l'une des information(s) de défaut sur ledit support.

La présente invention permet également d'utiliser la carte électronique, le microprocesseur ou tout circuit électronique de base d'un appareil de protection en vue de de former le circuit électronique 5a du dispositif indicateur de défaut(s) et éviter ainsi de rajouter un nouveau/autre circuit électronique, ce qui permet de réduire les coûts de fabrication et l'encombrement.

Le circuit électronique 5a peut être configuré pour piloter l'indication de la ou des informations de défaut selon un ordre d'indication prédéterminée et/ou selon une durée prédéterminée pour la ou chaque information de défaut à indiquer.

Le circuit électronique 5a peut être configuré pour permettre l'indication de la ou d'au moins l'une des information(s) de défaut tant que la commande de l'activation de l'indicateur (5b) lumineux et/ou sonore est effectuée ou selon une durée prédéterminée déclenchée lors de la commande.

L'appareil de protection 1 peut comprendre en outre un dispositif de communication à distance, non représentée, configuré pour pouvoir être activé par le circuit électronique 5a et pour pouvoir transmettre à distance, par voie filaire ou sans fil, la ou les information(s) de défaut depuis l'appareil de protection 1 vers un support intelligent ou multifonctions, fixe ou mobile, tel qu'un téléphone portable, un smartphone, un ordinateur fixe ou portable, une tablette électronique ou un appareil de diagnostic, comprenant un écran et/ou un haut-parleur formant alors l'indicateur 5b lumineux et/ou sonore. Le circuit électronique 5a peut alors être configuré pour pouvoir activer, lors de la commande manuelle ou automatique de l'activation de l'indicateur lumineux et/ou sonore 5b, le dispositif de communication pour réaliser ladite transmission à distance vers le support intelligent ou multifonctions.

Le circuit électronique 5a peut comprendre un programme informatique pour le traitement des défauts détectés, c'est-à-dire des signaux électriques représentatifs du ou desdits défauts détecté(s), leur traitement en vue de déterminer la ou les informations de défaut à indiquer, leur mémorisation et, le cas échéant, le pilotage de l'ordre d'indication de la ou desdites informations de défaut.

Le moyen de commande 5c manuel, tel qu'un bouton poussoir, peut être configuré pour pouvoir, lorsqu'il est sollicité manuellement, être déplacé entre une première position (figure 3) ayant pour effet d'activer la commande et une deuxième position (figure 2) ayant pour effet d'arrêter la commande. Le circuit électronique 5a peut être apte à gérer l'activation de l'indicateur 5b lumineux et/ou sonore de manière continue tant que le moyen de commande 5c manuel est sollicité pour être maintenu dans ladite première position ou, suite à la sollicitation, selon une durée d'activation prédéterminée, par exemple au moyen d'une temporisation que peut comprendre le circuit électronique 5a. La temporisation peut permettre d'éviter à l'utilisateur une sollicitation trop longue et de le libérer une fois la sollicitation effectuée.

Le mécanisme de contacts 2 peut être apte à être relié à la ligne L électrique en un point de connexion 3 de sorte à pouvoir interrompre le passage du courant dans ladite ligne électrique L en aval dudit point de connexion 3. Le dispositif indicateur de défaut(s), plus particulièrement le circuit électronique 5a, peut comprendre au moins deux entrées d'alimentation 50a, 51a, à savoir une première entrée d'alimentation 50a et une deuxième entrée d'alimentation 51a, aptes et destinées à être reliées à la ligne électrique L, c'est-à-dire à la source de courant S via ladite ligne électrique L, en amont du point de connexion 3 et/ou, le cas échéant, à la source de courant autonome, la première entrée 50a pouvant être reliée au moyen de commande 5c de l'indicateur de défaut(s) 5c lumineux et/ou sonore (figures 2, 3 et 4).

Dans le cas où le dispositif indicateur de défaut(s) est alimenté par la source de courant S alternatif alimentant la ligne électrique L, la première entrée d'alimentation 50a peut être prévue pour être reliée, via le moyen de commande 5c, au conducteur de potentiel électrique, tel que le conducteur de phase P ou l'un des conducteurs de phase P de la ligne électrique L et la deuxième entrée d'alimentation 51a peut être prévue pour être reliée au conducteur de référence de potentiel, tel que le conducteur de neutre N, de la ligne électrique L (figures 2, 3 et 4). De préférence, pour permettre l'alimentation en courant du dispositif indicateur de défaut(s) à l'état déclenché de l'appareil de protection 1 et de non sollicitation du moyen de commande 5c, les deux entrées d'alimentation 50a, 51a peuvent être reliées à la partie de la ligne électrique L située en amont du point de connexion 3 du mécanisme de contacts 2, c'est-à-dire entre ledit point de connexion 3 et la source de courant S alimentant la ligne électrique L puisque dans cette partie amont le passage du courant n'est pas interrompu par le mécanisme de contacts 2 à l'état déclenché (figures 2, 3 et 4).

Dans une alternative, non représentée sur les figures annexées, de la connexion du circuit électronique 5a à la ligne électrique L et plus particulièrement au conducteur de phase P ou à l'un des conducteurs de phase P et au conducteur de neutre N, la première entrée 50a peut être reliée au conducteur de neutre N via le moyen de commande 5c manuel et la deuxième entrée 51a peut être reliée au conducteur de phase P ou à l'un des conducteurs de phase P.

Dans le cas où le dispositif indicateur de défaut(s) est prévu pour être alimenté par la source de courant S alternatif de la ligne électrique L et pour permettre l'alimentation en courant dudit dispositif indicateur de défaut(s) à l'état de réarmement de l'appareil de protection 1, le dispositif indicateur de défaut(s), et plus particulièrement le circuit électronique 5a de ce dernier, peut comprendre une troisième entrée d'alimentation 52a apte et destinée à être reliée à la ligne électrique L, de préférence au conducteur de phase P ou à l'un des conducteurs de phase P, en aval du point de connexion 3 (figure 4). Dans une autre forme de réalisation, la troisième entrée d'alimentation 52a peut être apte et destinée à être reliée à la ligne électrique L, plus particulièrement au conducteur de phase P ou à l'un des conducteurs de phase P, via un interrupteur 7 que peut comprendre en outre l'appareil de protection 1, en amont du point de connexion 3 (figures 1, 2, 3, 4). L'interrupteur 7 peut être prévu pour pouvoir être commandé en fermeture lors du réarmement du mécanisme de contacts 2 de sorte à permettre le passage du courant vers la troisième entrée d'alimentation 52a et, comme on peut le voir sur les figures 2 et 3, en ouverture lors du déclenchement de sorte à interrompre le passage du courant.

L'interrupteur 7 peut être prévu et utilisé pour former un interrupteur test, permettant à un opérateur de faire un test de protection tout en isolant le circuit électronique 5a lorsque ledit interrupteur est à l'état ouvert et l'appareil de protection à l'état déclenché.

La troisième entrée d'alimentation 52a permet également, dans le cas où le circuit électronique 5a du dispositif indicateur de défaut(s) est formé par, ou intégré dans, le circuit électronique de base de l'appareil de protection 1, à l'état de réarmement, d'alimenter ledit circuit électronique de base.

Plus particulièrement, on comprend que lorsque l'appareil de protection 1, à savoir le mécanisme de contacts 2, est déclenché, le circuit électronique 5a détecte tout d'abord, avant toute sollicitation, que les entrées d'alimentation 50a, et 52a ne sont pas alimentées du fait du déclenchement, puis, selon la sollicitation se traduisant par une mise en tension de la première entrée 50a et/ou de la troisième entrée 52a, détecte la sollicitation concernée sur le moyen de commande 5c ou, le cas échéant, l'interrupteur 7 de test, en vue d'activer l'indicateur 5b lumineux et/ou sonore ou, le cas échéant, de permettre la réalisation du test de protection commandé. Le circuit électronique 5a, plus particulièrement le microprocesseur ou le microcontrôleur dudit circuit électronique 5a, peut détecter ainsi, à l'état déclenché, que la mise sous tension dudit circuit électronique 5a se fait au moyen de la sollicitation du moyen de commande 5c, le cas échéant de l'interrupteur 7 de test par le fait qu'il n'était pas alimenté, c'est-à-dire sous tension au niveau de ses entrées d'alimentation 50a, 51a, 52a, quelques instants avant la sollicitation plus le fait que la première entrée 50a, le cas échéant la troisième entrée d'alimentation 52a, est sous tension du fait de la sollicitation dudit moyen de commande 5c, le cas échéant, dudit interrupteur 7.

La présente invention a également pour objet une installation électrique comprenant une ligne électrique L et au moins un appareil de protection 1, ladite installation comprenant en outre une source de courant S ou de tension, qui peut être respectivement une source de courant alternatif ou continu ou une source de tension alternative ou continue, alimentant ladite ligne électrique L à laquelle est reliée fonctionnellement le ou chaque appareil de protection 1 (figures 2, 3 et 4).

Conformément à la présente invention, dans une telle installation le ou au moins l'un des appareil(s) de protection 1 consiste en un appareil de protection selon la présente invention (figures 2, 3 et 4). En outre, le mécanisme de contacts 2 dudit appareil de protection 1 est relié fonctionnellement à la ligne électrique L en un point de connexion 3 de sorte à pouvoir interrompre, à l'état déclenché, le passage du courant dans ladite ligne en aval dudit point de connexion 3.

Les deux entrées d'alimentation 50a, 51a, telle que définies précédemment, peuvent être reliées à la ligne électrique L en amont du point de connexion 3 et/ou, le cas échéant, à la source de courant autonome, de sorte à pouvoir, alimenter en courant ledit dispositif indicateur de défaut(s) à l'état de déclenchement de l'appareil de protection 1.

En outre, la première entrée d'alimentation 50a peut être reliée à la ligne électrique L via le moyen de commande 5c manuel de l'indicateur 5b lumineux et/ou sonore.

Comme on peut le voir sur les figures 2, 3 et 4, la ligne électrique L alimentée par la source de courant S, le cas échéant la source de tension, alimentant la ligne électrique L peut comprendre au moins un conducteur de référence de potentiel électrique, tel qu'un conducteur de neutre N, et au moins un conducteur de potentiel électrique, tel qu'un conducteur de phase P, reliés à ladite source de courant S alimentant la ligne électrique L. Le mécanisme de contacts 2 peut être connecté au point de connexion 3 aux conducteurs de la ligne électrique L, tels que les conducteurs de neutre N et de phase P dans le cas d'une source de courant S alimentant la ligne électrique L.

A l'état de déclenchement, la partie de la ligne électrique L située en aval dudit point de connexion 3 n'est plus alimentée en courant, contrairement à la partie située en amont dudit point de connexion 3. La partie amont peut être une partie amont de la ligne électrique L ou une liaison électrique reliant la ligne électrique L à protéger à la source de courant S alimentant la ligne électrique L.

Si on se réfère plus particulièrement à la figure 3, on peut voir que la troisième entrée d'alimentation 52a que peut comprendre le circuit électronique 5a, peut être reliée à la ligne électrique L, plus particulièrement au conducteur de phase P, en aval du point de connexion 3.

Dans le cas où la source de courant S est une source de courant alternatif, le cas échéant une source de tension alternative, et la ligne électrique L comprend au moins un conducteur de phase P et un conducteur de neutre N. Comme on peut le voir sur les figures 2, 3 et 4, la première entrée 50a peut être reliée au conducteur de phase P ou à l'un des conducteurs de phase P, via le moyen de commande 5c manuel, en amont du point de connexion 3 et la deuxième entrée 51a peut être reliée au conducteur de neutre N en amont du point de connexion 3.

Dans le cas d'une ligne électrique L polyphasée, non représentée sur les figures annexés, comprenant une pluralité de conducteurs de phase P, le circuit électronique 5a peut comprendre au moins une entrée d'alimentation supplémentaire apte et destinée à être reliée au conducteur de phase supplémentaire correspondant de la ligne électrique L.

La ligne électrique L peut comprendre également l'ensemble des produits, machines ou autres éléments fonctionnant dans la dite ligne et connectés au(x) conducteur(s) de phase P et au conducteur de neutre N de la ligne électrique L et susceptibles d'être à l'origine d'un défaut détecté par l'appareil de protection selon la présente invention.

Si on se réfère à la figure 3, on peut voir que la troisième entrée d'alimentation 52a que peut comprendre le circuit électronique 5a, peut être reliée à la ligne électrique L, plus particulièrement au conducteur de phase P, en amont du point de connexion 3 par l'intermédiaire de l'interrupteur 7 de test que peut comprendre l'appareil de protection 1 pour permettre de réaliser le test de protection à l'état de déclenchement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé permettant, à partir d'un appareil de protection (1), d'indiquer au moins une information de défaut relative à au moins un défaut détecté dans une ligne électrique (L), ladite ligne électrique (L) étant alimentée par une source de courant (S) ou de tension, ledit appareil de protection (1) étant apte à détecter le ou lesdits défauts détecté(s) et, suite à ladite détection, à être mis dans un état de déclenchement interrompant le passage du courant dans la ligne électrique (L) et dans un état de réarmement permettant le passage du courant dans cette dernière,
procédé **caractérisé en ce qu'**il consiste, suite à la détection du ou d'au moins un défaut par l'appareil de protection (1), à réaliser les étapes suivantes :
- traiter le ou les défaut(s) détecté(s) par l'appareil de protection (1) pour déterminer une ou des information(s) de défaut,
- mémoriser la ou les informations de défaut,
- à l'état déclenché de l'appareil de protection (1), indiquer la ou au moins l'une desdites information(s) à l'utilisateur en commandant manuellement ou automatiquement l'activation d'un indicateur (5b) lumineux et/ou sonore parcouru par un courant électrique provenant de la source de courant (S) alimentant la ligne électrique (L) ou d'une source d'énergie autonome.

2. Procédé, suivant la revendication 1, **caractérisé en ce qu'**il consiste à indiquer la ou les informations de défaut selon un ordre d'indication prédéterminé et/ou selon une durée prédéterminée pour la ou chaque information de défaut.

3. Procédé, suivant la revendication 1 ou la revendication 2, **caractérisé en ce qu'**il consiste à indiquer la ou au moins l'une des information(s) de défaut tant que la commande de l'activation de l'indicateur (5b) lumineux et/ou sonore est effectuée ou selon une durée prédéterminée déclenchée lors de la commande.

4. Procédé, suivant l'une quelconque des revendications 1 à 3, **caractérisé en ce qu'**il consiste à indiquer de manière lumineuse et/ou sonore la ou au moins l'une des information(s) de défaut :
- directement sur l'appareil de protection (1), et/ou,
- à distance dudit appareil de protection (1), sur un support intelligent ou multifonctions, fixe ou mobile, tel qu'un téléphone portable, un smartphone, un ordinateur fixe ou portable, une tablette électronique ou un appareil de diagnostic, comprenant un écran et un haut-parleur formant l'indicateur (5b) lumineux et/ou sonore, et ceci par l'intermédiaire d'un dispositif de communication à distance, filaire ou sans fil, que comprend en outre l'appareil de protection (1) et qui peut être activé lors de la commande manuelle ou automatique de l'activation de l'indicateur (5b) lumineux et/ou sonore.

5. Appareil de protection (1), convenant à la mise oeuvre du procédé selon l'une quelconque des revendications 1 à 4, ledit appareil de protection (1) comprenant un mécanisme de contacts (2) apte à être déclenché dans un état de déclenchement permettant d'interrompre le passage du courant dans une ligne électrique (L) alimentée par une source de courant (S) ou de tension et à être enclenché dans un état de réarmement permettant le passage du courant dans ladite ligne électrique (L), un mécanisme de détection de défaut et de déclenchement capable de détecter au moins un défaut dans ladite ligne électrique (L) et, suite à ladite détection, de déclencher automatiquement le mécanisme de contacts (2) et un organe de manoeuvre (4) permettant de commander ce dernier pour le mettre à l'état de réarmement,
appareil de protection (1) **caractérisé en ce qu'**il comprend en outre un dispositif indicateur de défaut(s) lumineux et/ou sonore, comprenant un circuit électronique (5a) apte à traiter le ou les défaut(s) détecté(s) pour déterminer une ou des information(s) de défaut et à mémoriser cette/ces dernière(s), un indicateur (5b) lumineux et/ou sonore apte à être activé dans un état parcouru par un courant électrique permettant d'indiquer de manière lumineuse et/ou sonore la ou au moins l'une des information(s) de défaut et un moyen de commande (5c) manuel ou automatique permettant de commander manuellement, via le circuit électronique (5a) ou automatiquement, depuis ledit circuit électronique (5a), l'activation de l'indicateur (5b) lumineux et/ou sonore, ledit dispositif indicateur de défaut(s) étant apte à être alimenté en courant par la source de courant (S) alimentant la ligne électrique (L) et/ou par une source de courant autonome que peut comprendre en outre l'appareil de protection (1) ou qui peut être reliée à ce dernier.

6. Appareil de protection (1), suivant la revendication 5, **caractérisé en ce que** le circuit électronique (5a) est configuré pour piloter l'indication de la ou des informations de défaut selon un ordre d'indication prédéterminée et/ou selon une durée prédéterminée pour la ou chaque information de défaut à indiquer.

7. Appareil de protection (1), suivant la revendication 5 ou la revendication 6, **caractérisé en ce que** le circuit électronique (5a) est configuré pour permettre l'indication de la ou au moins l'une des information(s) de défaut tant que la commande de l'activation de l'indicateur (5b) lumineux et/ou sonore est effectuée ou selon une durée prédéterminée déclenchée lors de la commande.

8. Appareil de protection (1), suivant l'une quelconque des revendications 5 à 7, caractérisé en qu'il comprend en outre un dispositif de communication à distance configuré pour pouvoir être activé par le circuit électronique (5a) et pour pouvoir transmettre à distance, par voie filaire ou sans fil, la ou au moins l'une des informations de défaut depuis ledit appareil de protection (1) vers un support intelligent ou multifonctions, fixe ou mobile, tel qu'un téléphone portable, un smartphone, un ordinateur fixe ou portable, une tablette électronique ou un appareil de diagnostic, comprenant un écran et/ou un haut-parleur formant alors l'indicateur (5b) lumineux et/ou sonore, ledit circuit électronique (5a) étant configuré pour pouvoir activer, lors de la commande manuelle ou automatique de l'activation de l'indicateur lumineux et/ou sonore (5b), le dispositif de communication pour réaliser ladite transmission à distance vers le support intelligent ou multifonctions.

9. Appareil de protection (1), suivant l'une quelconque des revendications 5 à 8, **caractérisé en ce que** le moyen de commande (5c) manuel, tel qu'un bouton poussoir, est configuré pour pouvoir, lorsqu'il est sollicité manuellement, être déplacé entre une première position ayant pour effet d'activer la commande et une deuxième position ayant pour effet d'arrêter la commande et **en ce que** le circuit électronique (5a) est apte à gérer l'activation de l'indicateur (5b) lumineux et/ou sonore de manière continue tant que le moyen de commande (5c) manuel est sollicité pour être maintenu dans ladite première position ou, suite à la sollicitation, selon une durée d'activation prédéterminée, par exemple au moyen d'une temporisation que peut comprendre le circuit électronique (5a).

10. Appareil de protection (1), suivant l'une quelconque des revendications 5 à 9, **caractérisé en ce que** l'indicateur (5b) lumineux et/ou sonore peut consister en une ou plusieurs sources lumineuses telles que des LEDs ou en un écran d'affichage lumineux, tactile ou non et/ou en au moins un haut-parleur.

11. Appareil de protection, suivant l'une quelconque des revendications 5 à 10, **caractérisé en ce que** le mécanisme de contacts (2) est apte à être relié à la ligne (L) électrique en un point de connexion (3) de sorte à pouvoir interrompre le passage du courant dans ladite ligne électrique (L) en aval dudit point de connexion (3) et **en ce que** le dispositif indicateur de défaut(s), plus particulièrement le circuit électronique (5a), comprend au moins deux entrées d'alimentation (50a, 51a), à savoir une première entrée d'alimentation (50a) et une deuxième entrée d'alimentation (51a), aptes et destinées à être reliées à la ligne électrique (L) en amont du point de connexion (3) et/ou, le cas échéant, à la source de courant autonome, la première entrée (50a) étant reliée au moyen de commande (5c) de l'indicateur de défaut(s) (5c) lumineux et/ou sonore.

12. Appareil de protection, suivant l'une quelconque des revendications 5 à 11, **caractérisé en ce qu'**il comprend un boîtier (1a) pour contenir l'ensemble des composants et des mécanismes de fonctionnement de base dudit appareil de protection (1) tels que le mécanisme de contacts (2) et le mécanisme de détection de défaut et de déclenchement et **en ce que** ledit boîtier (1a) est adapté pour contenir en outre le dispositif indicateur de défaut(s) et présente au moins une face externe/visible, de préférence une face frontale (10a), comportant les organes de commande tels que l'organe de manoeuvre (4) et le moyen de commande (5c) de l'indicateur (5b) lumineux et/ou sonore.

13. Appareil de protection, suivant l'une quelconque des revendications 5 à 12, **caractérisé en ce que** le circuit électronique (5a) comprend un microprocesseur ou un microcontrôleur et au moins une mémoire pour stocker la ou les informations de défaut à indiquer.

14. Installation électrique comprenant une ligne électrique (L) et au moins un appareil de protection (1), ladite installation comprenant en outre une source de courant (S) ou de tension alimentant ladite ligne électrique (L) à laquelle est relié fonctionnellement le ou chaque appareil de protection (1), **caractérisée en ce que** le ou au moins l'un des appareil(s) de protection (1) consiste en un appareil de protection selon l'une quelconque des revendications 5 à 13 et **en ce que** le mécanisme de contacts (2) dudit appareil de protection (1) est relié fonctionnellement à la ligne électrique (L) en un point de connexion (3) de sorte à pouvoir interrompre, à l'état déclenché, le passage du courant dans ladite ligne électrique (L) en aval dudit point de connexion (3).

15. Installation électrique, suivant la revendication 14, **caractérisée en ce que** les deux entrées d'alimentation (50a, 51a), telle que définies dans la revendication 11, sont reliées à la ligne électrique (L), en amont du point de connexion (3).

16. Installation électrique, suivant la revendication 15, **caractérisée en ce que** la première entrée d'alimentation (50a) est reliée à la ligne électrique (L) via le moyen de commande (5c) manuel de l'indicateur (5b) lumineux et/ou sonore.

17. Installation électrique, suivant l'une quelconque des revendications 15 à 16, **caractérisé en ce que** la source de courant (S) ou de tension est une source de courant alternatif ou une source de tension alternative et **en ce que** la ligne électrique (L) comprend au moins un conducteur de phase (P) et un conducteur de neutre (N), la première entrée (50a) étant reliée au conducteur de phase (P) ou à l'un des conducteurs de phase (P), le cas échéant via le moyen de commande (5c) manuel, en amont du point de connexion (3) et la deuxième entrée (51a) est reliée au conducteur de neutre (N) en amont du point de connexion (3).
